# EUROPÄISCHE PATENTSCHRIFT

(11) **EP 4 356 016 B1**
(45) Veröffentlichungstag und Bekanntmachung des Hinweises auf die Patenterteilung: **31.12.2025**
(21) Anmeldenummer: 22718997.4
(22) Anmeldetag: 11.04.2022
(51) Int. Cl.: F16C 33/10, F16N 7/28, F16N 7/32, F16N 31/00, F16C 17/02

(54) **LAGERANORDNUNG**
BEARING ARRANGEMENT
DISPOSITION DE PALIER

(30) Priorität: 14.06.2021 DE 102021115285
(43) Veröffentlichungstag der Anmeldung: 24.04.2024
(73) Patentinhaber: Voith Patent GmbH, 89522 Heidenheim (DE)
(72) Erfinder: SCHAGERL, Robert, 3243 St. Leonhard am Forst (AT); SCHABASSER, Martin, 3123 Pfaffing (AT)
(74) Vertreter: Voith Patent GmbH - Patentabteilung
(86) Internationale Anmeldenummer: PCT/EP2022/059583
(87) Internationale Veröffentlichungsnummer: WO 2022/263040

(56) Entgegenhaltungen:
- DE-A1- 102008 011 561
- DE-B3- 102020 104 960
- JP-A- H08 326 756

## Beschreibung

Die Erfindung betrifft eine Lageranordnung, wobei die Schmierung des Lagers über ein Ölbad erfolgt. Solche Lageranordnungen kommen insbesondere in Wasserkraftwerken zum Einsatz.

Die RU 2 161 730 C2 zeigt beispielsweise eine solche Lageranordnung. Zur Vermeidung des Entweichens von Öldunst aus dem Lagergehäuse kommt eine Öldunstabsaugung zum Einsatz. Eine Öldunstabsaugung ist ein Kostenfaktor und verursacht zudem laufende Betriebskosten und einen laufenden Energieverbrauch.

JP H08 326756 A offenbart eine Lageranordnung gemäß der Präambel von Anspruch 1.

Die Aufgabe der Erfindung ist es, eine Lageranordnung anzugeben, welche ein Entweichen von Öldunst weitestgehend verhindert, ohne dass eine Öldunstabsaugung benötigt werden.

Die Aufgabe wird erfindungsgemäß durch eine Lageranordnung entsprechend dem unabhängigen Anspruch gelöst. Weitere vorteilhafte Merkmale der erfindungsgemäßen Ausführung finden sich in den Unteransprüchen.

Im Folgenden wird die erfindungsgemäße Lageranordnung anhand von Figuren erläutert. Die Figuren zeigen im Einzelnen:
Fig.1 Erfindungsgemäße Lageranordnung in einer ersten Ausführungsform
Fig.2 Erfindungsgemäße Lageranordnung in einer zweiten Ausführungsform

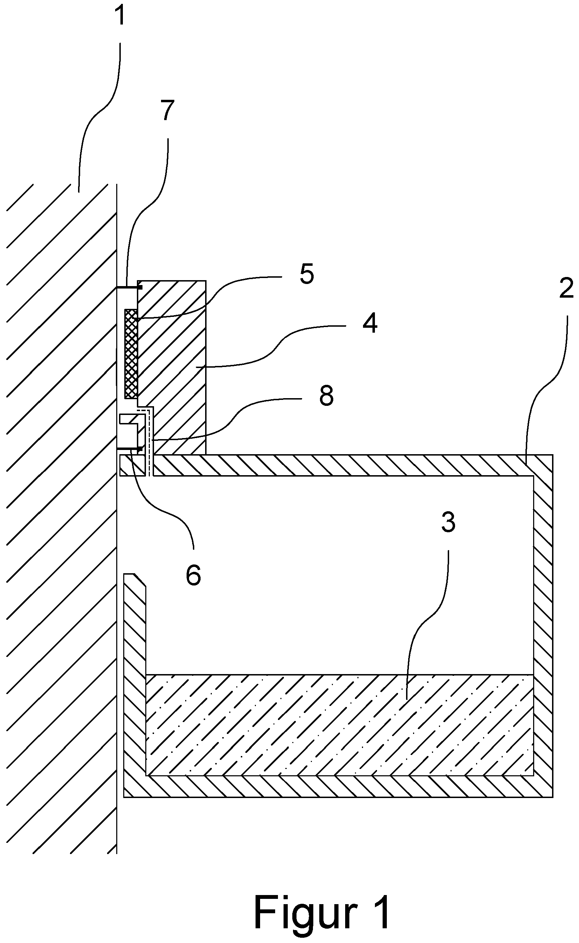

Figur 1 zeigt eine erfindungsgemäße Lageranordnung in einer ersten Ausführungsform in schematischer Darstellung. Die Lageranordnung umfasst eine Welle, welche mit 1 bezeichnet ist, ein Gehäuse, welches mit 2 bezeichnet ist und ein Bad, welches mit 3 bezeichnet ist und Öl enthält. Bei der in Figur 1 dargestellten Ausführungsform handelt es sich um eine Ausführungsform mit vertikal angeordneter Welle 1. Das Bad 3 ist innerhalb des Gehäuses 2 angeordnet. Dieses Ölbad 3 dient zur Schmierung und Kühlung von Lagerflächen und Lagersegmenten, welche in Figur 1 der Übersichtlichkeit halber nicht dargestellt sind. Dabei erwärmt sich das Öl, was zur Bildung eines Öldunstes bzw. eines Ölnebels führt. Um zu vermeiden, dass der Öldunst sensible Bereiche außerhalb des Gehäuses 2 kontaminieren kann, umfasst die Lageranordnung eine erste und eine zweite Dichtung, welche in Figur 1 mit 6 und 7 bezeichnet sind. Die Dichtungen 6 und 7 werden dabei von einer Trägerstruktur getragen, welche mit 4 bezeichnet ist. Die Trägerstruktur 4 ist mit dem Gehäuse 2 verbunden und ist um die Welle 1 herum angeordnet. Dazu ist es von Vorteil, wenn die Trägerstruktur 4 aus mehreren Segmenten aufgebaut ist. Die Dichtungen 6 und 7 erstrecken sich zwischen der Trägerstruktur 4 und der Welle 1. Die in Figur 1 gezeigten Dichtungen 6 und 7 sind als Messerdichtungen ausgeführt. Sie könnten aber auch in jeder anderen bekannten und geeigneten Weise ausgeführt sein. Da reale Dichtungen keine ideale Abdichtung ermöglichen, müssen weitere Mittel vorgesehen sein, die ein Entweichen von Öldunst zusätzlich verhindern können.

In den Lageranordnungen gemäß dem Stand der Technik werden hierzu die bereits eingangs erwähnten Öldunstabsaugungen vorgesehen. Dabei münden die Absaugrohre im Raum zwischen den Dichtungen 6 und 7, der Trägerstruktur 4 und der Welle 1. In dieser bekannten Anordnung dienen die Dichtungen 6 und 7 auch dazu, den Absaugvolumenstrom zu begrenzen.

Eine erfindungsgemäße Lageranordnung umfasst hingegen wenigstens eine Elektrode, welche in Figur 1 mit 5 bezeichnet ist. Die Elektrode bzw. die Elektroden 5 sind dabei mit der Trägerstruktur 4 verbunden und zwischen der Trägerstruktur 4 und der Welle 1 so angeordnet, dass Öldunst aus dem Ölbad 3, welcher die erste Dichtung 6 passiert, einen Spalt zwischen einer Elektrode 5 und der Welle 1 passieren muss, um entweichen zu können. Das bedeutet, dass die Elektrode bzw. die Elektroden 5 um die Welle 1 herum angeordnet sind, und dass die erste Dichtung 6 zwischen dem Ölbad 3 und der Elektrode bzw. den Elektroden 5 angeordnet ist.

Es ist bekannt, dass Ölpartikel durch ein elektrisches Feld abgelenkt werden können. Daher ist die erfindungsgemäße Lageranordnung so ausgebildet, dass zwischen den Elektroden 5 und der Welle 1 eine elektrische Spannung angelegt werden kann, um im Öldunst enthaltene Ölpartikel auf die Elektroden 5 zu lenken, so dass sich die Ölpartikel an den Elektroden 5 abscheiden können. Dadurch wird der den Spalt zwischen Elektroden 5 und Welle 1 passierende Gasstrom von Öl gereinigt. Der beschriebene erwünschte Effekt kann durch die Spaltweite und die axiale Länge der Elektroden 5 optimiert werden. Dabei ist die axiale Länge die Ausdehnung der Elektroden 5 in Richtung der Wellenachse. Je geringer die Spaltweite und je größer die axiale Länge der Elektroden 5 gewählt wird, desto effektiver wird der erwähnte Gasstrom von Öl gereinigt. Das bedeutet, dass man erfindungsgemäß u.U. auf die zweite Dichtung 7 verzichten kann, welche daher als optional zu betrachten ist. Die optionale zweite Dichtung 7 ist von der ersten Dichtung 6 aus betrachtet in axialer Richtung jenseits der Elektroden 5 angeordnet. Optional kann die Lageranordnung auch noch mehr Dichtungen umfassen. Diese weiteren Dichtungen können beispielsweise zwischen der ersten Dichtung 6 und den Elektroden 5 oder zwischen der zweiten Dichtung 7 und den Elektroden 5 angeordnet sein.

Das an den Elektroden 5 abgeschiedene Öl läuft als Ölfilm der Schwerkraft folgend ab. Zur Ableitung des abgeschiedenen Öls umfasst die Lageranordnung wenigstens einen Ablaufkanal, welcher so angeordnet ist, dass abgeschiedenes Öl durch den Ablaufkanal in das Ölbad 3 fließen kann. In Figur 1 ist der Ablaufkanal mit 8 bezeichnet.

In der in Figur 1 dargestellten Ausführungsform mit vertikal angeordneter Welle 1 ist es von Vorteil, wenn außerdem noch Mittel zum Auffangen des abgeschiedenen Öls vorgesehen sind. In Figur 1 umfassen diese Mittel eine Auskragung der Trägerstruktur 4, wobei die Auskragung so angeordnet ist, dass an den Elektroden 5 abgeschiedenes Öl auf die Auskragung tropfen kann. Der Ablaufkanal 8 mündet direkt an der Oberseite der Auskragung, so dass das von der Auskragung aufgefangene Öl problemlos abfließen kann. Zur besseren Ableitung des Öls kann die Auskragung so geneigt sein, dass die Neigung bewirkt, das das von der Auskragung aufgefangene Öl in Richtung der Mündung des Ablaufkanales fließt.

In Ausführungsformen mit horizontal angeordneter Welle 1 sammelt sich das abgeschiedene Öl am tiefsten Punkt der der Welle 1 zugekehrten Oberfläche der Elektroden 5. Dazu ist es u.U. notwendig, dass die Elektroden 5 in Umfangsrichtung aneinander angrenzen, so dass das Öl von einer Elektrode 5 zur benachbarten Elektrode 5 fließen kann. Das Öl kann u.U. aber auch einen ggf. vorhandenen Zwischenraum von einer Elektrode 5 zur benachbarten Elektrode 5 fallend, d.h. als Tropfen, überwinden. Auch bei Ausführungsformen mit vertikal angeordneter Welle 1 können sich zwischen den Elektroden 5 in Umfangsrichtung Spalte befinden. Allerdings ist es in jedem Fall von Vorteil, wenn die Weite dieser Spalte nicht viel größer ist als die Weite des Spaltes zwischen der Welle 1 und den Elektroden 5.

In Ausführungsformen mit horizontal angeordneter Welle 1 mündet der wenigstens eine Ablaufkanal 5 dort wo sich abgeschiedenes Öl sammelt. D.h. beispielsweise an der oben erwähnten tiefsten Stelle der Elektrodenoberfläche. Eine weitere geeignete Mündungsstelle ist in axialer Richtung neben einer Elektrode 5 an der tiefst gelegenen Stelle der Trägerstruktur 4 angeordnet. Es ist dann von Vorteil, wenn Mündungen auf beiden axialen Seiten der betreffenden Elektrode 5 angeordnet sind.

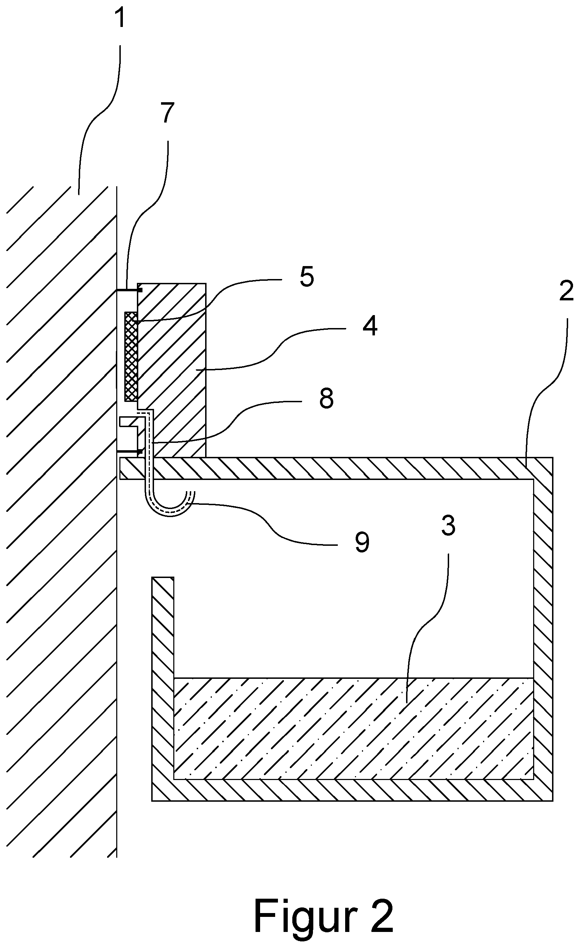

Figur 2 zeigt eine weitere erfindungsgemäße Ausführungsform. Die gezeigte Lageranordnung umfasst einen Siphon, welcher mit 9 bezeichnet ist und welcher im Ablaufkanal 8 angeordnet ist. Der Siphon 9 ist so angeordnet, dass er sich mit abgeschiedenem Öl anfüllen und dadurch den Ablaufkanal 8 so abdichten kann, dass kein Öldunst vom Ölbad 3 aus denselben passieren kann.

Die erfindungsgemäße Lageranordnung kann das Entweichen von Öldunst weitestgehend verhindern, ohne dass dabei eine Ölabsaugung benötigt wird. Die Energie, die zum Aufbau und zur Aufrechterhaltung des statischen elektrischen Feldes zwischen Welle und Elektroden benötigt wird, ist dabei viel kleiner als der Energieverbrauch einer Ölabsaugung.

Abschließend sei erwähnt, dass herkömmlicherweise gattungsgemäße Lageranordnungen so ausgebildet sind, dass die Welle 1 geerdet ist. D.h. eine erfindungsgemäße Lageranordnung umfasst in diesem Fall eine Spannungsquelle, welche so ausgebildet und angeordnet ist, dass dieselbe ein elektrisches Potential zwischen den Elektroden 5 und der Erde aufbauen kann. Wenn die Welle 1 nicht geerdet ist, dann muss die Spannungsquelle sowohl mit den Elektroden 5 als auch mit der Welle 1 verbindbar bzw. verbunden sein.

### Bezugszeichenliste

- 1: Welle
- 2: Gehäuse
- 3: Ölbad
- 4: Trägerstruktur
- 5: Elektrode
- 6: Dichtung
- 7: Dichtung
- 8: Ablaufkanal
- 9: Siphon

## Patentansprüche

1. Lageranordnung umfassend eine Welle (1), ein Gehäuse (2), ein Ölbad (3), welches im Gehäuse (2) angeordnet ist, eine Trägerstruktur (4), welche mit dem Gehäuse (2) verbunden und um die Welle (1) herum angeordnet ist, und wenigstens eine erste Dichtung (6), welche von der Trägerstruktur (4) getragen wird und sich zwischen der Trägerstruktur (4) und der Welle (1) erstreckt, **dadurch gekennzeichnet, dass** die Lageranordnung wenigstens eine Elektrode (5) umfasst, welche mit der Trägerstruktur (4) verbunden und zwischen der Trägerstruktur (4) und der Welle (1) so angeordnet ist, dass Öldunst aus dem Ölbad (3), welcher die erste Dichtung (6) passiert, einen Spalt zwischen der Elektrode (5) und der Welle (1) passieren muss, um entweichen zu können, und wobei die Lageranordnung so ausgebildet ist, dass zwischen der Elektrode (5) und der Welle (1) eine elektrische Spannung angelegt werden kann, um im Öldunst enthaltene Ölpartikel auf die Elektrode (5) zu lenken, so dass sich die Ölpartikel an der Elektrode (5) abscheiden können, und wobei die Lageranordnung wenigstens einen Ablaufkanal (8) umfasst, welcher so ausgebildet ist, dass an der Elektrode (5) abgeschiedenes Öl durch den Ablaufkanal (8) in das Ölbad (3) fließen kann.

2. Lageranordnung nach Anspruch 1, wobei die Lageranordnung eine zweite Dichtung (7) umfasst, welche von der Trägerstruktur (4) getragen wird und sich zwischen der Trägerstruktur (4) und der Welle (1) erstreckt, und wobei die zweite Dichtung (7) von der ersten Dichtung (6) aus betrachtet jenseits der Elektrode (5) angeordnet ist.

3. Lageranordnung nach Anspruch 1 oder 2, wobei die Lageranordnung einen Siphon (9) umfasst, welcher im Ablaufkanal (8) angeordnet ist, und wobei der Siphon (9) ist so angeordnet ist, dass er sich mit dem an der Elektrode (5) abgeschiedenen Öl anfüllen und dadurch den Ablaufkanal (8) so abdichten kann, dass kein Öldunst vom Ölbad (3) aus denselben passieren kann.

4. Lageranordnung nach einem der vorherigen Ansprüche, wobei die Welle (1) horizontal angeordnet ist.

5. Lageranordnung nach einem der vorherigen Ansprüche, wobei die Welle (1) vertikal angeordnet ist.

6. Lageranordnung nach Anspruch 5, wobei die Lageranordnung Mittel zum Auffangen des an der Elektrode (5) abgeschiedenen Öls umfasst.

7. Lageranordnung nach Anspruch 6, wobei die Mittel zum Auffangen des an der Elektrode (5) abgeschiedenen Öls eine Auskragung der Trägerstruktur (4) umfassen, wobei die Auskragung so angeordnet ist, dass an der Elektrode (5) abgeschiedenes Öl auf die Auskragung tropfen kann.

## Claims

1. Bearing arrangement comprising a shaft (1), a housing (2), an oil bath (3) arranged in the housing (2), a support structure (4) connected to the housing (2) and arranged around the shaft (1), and at least one first seal (6) supported by the support structure (4) and extending between the support structure (4) and the shaft (1), **characterised in that** the bearing arrangement comprises at least one electrode (5) connected to the support structure (4) and arranged between the support structure (4) and the shaft (1) such that oil vapour from the oil bath (3), which the first seal (6) passes, must pass through a gap between the electrode (5) and the shaft (1) in order to escape, and wherein the bearing arrangement is designed such that an electrical voltage can be applied between the electrode (5) and the shaft (1) in order to direct oil particles contained in the oil vapour onto the electrode (5) so that the oil particles can be deposited on the electrode (5), and wherein the bearing arrangement comprises at least one drain channel (8) which is designed such that oil deposited on the electrode (5) can flow through the drain channel (8) into the oil bath (3).

2. Bearing arrangement according to claim 1, wherein the bearing arrangement comprises a second seal (7) which is supported by the support structure (4) and extends between the support structure (4) and the shaft (1), and wherein the second seal (7) is arranged beyond the electrode (5) as viewed from the first seal (6).

3. Bearing arrangement according to claim 1 or 2, wherein the bearing arrangement comprises a siphon (9) which is arranged in the drain channel (8), and wherein the siphon (9) is arranged so that it can fill with the oil deposited on the electrode (5) and thereby seal the drain channel (8) in such a way that no oil vapour can pass from the oil bath (3) through it.

4. Bearing arrangement according to one of the preceding claims, wherein the shaft (1) is arranged horizontally.

5. Bearing arrangement according to one of the preceding claims, wherein the shaft (1) is arranged vertically.

6. Bearing arrangement according to claim 5, wherein the bearing arrangement comprises means for collecting the oil deposited on the electrode (5).

7. Bearing arrangement according to claim 6, wherein the means for collecting the oil deposited on the electrode (5) comprise a projection of the support structure (4), wherein the projection is arranged such that oil deposited on the electrode (5) can drip onto the projection.

## Revendications

1. Dispositif de palier comprenant un arbre (1), un boîtier (2), un bain d'huile (3) disposé dans le boîtier (2), une structure de support (4) reliée au boîtier (2) et disposée autour de l'arbre (1), et au moins un premier joint d'étanchéité (6) porté par la structure de support (4) et s'étendant entre la structure de support (4) et l'arbre (1), **caractérisé en ce que** l'agencement de palier comprend au moins une électrode (5) qui est reliée à la structure de support (4) et disposée entre la structure de support (4) et l'arbre (1) de telle sorte que les vapeurs d'huile provenant du bain d'huile (3), que le premier joint d'étanchéité (6) traverse, doivent passer par un espace entre l'électrode (5) et l'arbre (1) pour pouvoir s'échapper, et l'agencement de palier étant conçu de telle sorte qu'une tension électrique puisse être appliquée entre l'électrode (5) et l'arbre (1) afin de diriger les particules d'huile contenues dans les vapeurs d'huile vers l'électrode (5) de manière à ce que les particules d'huile puissent se déposer sur l'électrode (5), et l'agencement de palier comprenant au moins un canal d'écoulement (8) qui est conçu de telle sorte que l'huile déposée sur l'électrode (5) puisse s'écouler à travers le canal d'écoulement (8) dans le bain d'huile (3).

2. Dispositif de palier selon la revendication 1, dans lequel le dispositif de palier comprend un deuxième joint d'étanchéité (7) qui est supporté par la structure de support (4) et s'étend entre la structure de support (4) et l'arbre (1), et dans lequel le deuxième joint d'étanchéité (7) est disposé au-delà de l'électrode (5) par rapport au premier joint d'étanchéité (6).

3. Dispositif de palier selon la revendication 1 ou 2, dans lequel le dispositif de palier comprend un siphon (9) qui est disposé dans le canal d'écoulement (8), et dans lequel le siphon (9) est disposé de manière à se remplir de l'huile déposée sur l'électrode (5) et à sceller ainsi le canal d'écoulement (8) de manière à ce qu'aucune vapeur d'huile provenant du bain d'huile (3) ne puisse s'échapper de celui-ci.

4. Dispositif de palier selon l'une des revendications précédentes, l'arbre (1) étant disposé horizontalement.

5. Dispositif de palier selon l'une des revendications précédentes, l'arbre (1) étant disposé verticalement.

6. Dispositif de palier selon la revendication 5, dans lequel le dispositif de palier comprend des moyens pour recueillir l'huile déposée sur l'électrode (5).

7. Dispositif de palier selon la revendication 6, dans lequel les moyens pour recueillir l'huile déposée sur l'électrode (5) comprennent un rebord de la structure de support (4), le rebord étant disposé de telle sorte que l'huile déposée sur l'électrode (5) puisse s'égoutter sur le rebord.
